# EUROPEAN PATENT SPECIFICATION

(11) **EP 0 591 245 B1**
(45) Date of publication and mention of the grant of the patent: **02.08.1995**
(21) Application number: 92910786.0
(22) Date of filing: 28.05.1992
(51) Int. Cl.: F16L 1/06, B65G 7/12

(54) **ELONGATE HOLLOW MEMBER**
VERLÄNGERTER HOHLKÖRPER
ELEMENT CREUX ALLONGE

(30) Priority: 31.05.1991 GB 9111777; 16.12.1991 GB 9126624
(43) Date of publication of application: 13.04.1994
(73) Proprietor: UPONOR LIMITED, Blackwell, Nr. Alfreton, Derbyshire DE55 5JD (GB)
(72) Inventor: HARRISON, Gordon, South Normanton, Derbyshire DE55 2EB (GB); LEES, George Albert, Keyworth, Nottingham NG12 5HP (GB); STENNER, Nigel Wayne, Shardlow, Derbyshire DE7 2GX (GB)
(74) Representative: Vinsome, Rex Martin
(86) International application number: GB9200965
(87) International publication number: WO9221907

(56) References cited:
- US-A- 2 749 173
- US-A- 4 697 830
- US-A- 4 723 800
- US-A- 4 915 422

## Description

This invention relates to elongate hollow members, and more particularly to elongate hollow members in the form of pipes and conduits, especially plastic pipe fittings.

Plastics pipes are now widely used in place of the more traditional earthenware and metal pipes for carrying fluids, for example, in the water, water treatment, and gas industries. Various fittings are used to join lengths of plastic pipe, of which thermoplastic heat-fusion pipe fittings are extremely popular. The designs for such fittings fall into three basic types. Firstly, those having an electric heating element which is embedded in the body of the fitting and located in close proximity to the surface of the fitting that is to be joined to the pipe by heat fusion. In the second type, the fitting may have a metal core embedded in the body thereof, in which eddy currents can be induced by the action of an induction coil thereby producing a heating effect in the core. Thirdly, there are those fittings which are intended to be heated by the application of an external heat source, for example, heat recoverable pipe fittings.

In recent years, both the pipes and the pipe fittings have become larger and more difficult to manoeuvre by hand. Once a pipe or pipe fitting becomes of such a size that it is too large for the hand to extend more than part way round the circumference, it is necessary to use two hands to lift the pipe, either by passing the hands underneath the pipe, or by inserting the fingers into the ends of the pipe if the pipe length is short enough to do so. This situation pertains to most pipes and pipe fittings of an external diameter greater than about 180 mms.

Long lengths of plastic pipe are often laid in a trench, and joined using thermoplastic heat-fusion pipe fittings. It is frequently necessary to manhandle the pipe fitting, in order to locate the fitting in the correct position, by rotation, swivelling, and/or sliding the fitting into place. In addition, it is often necessary to turn the fitting in order to attach electrical connections to the heating element. In carrying out these operations, particularly under wet or muddy conditions, difficulties in manhandling the heavier, larger diameter pipes and pipe fittings are frequently experienced, and it is also not uncommon for the internal surface of the pipe fitting to become contaminated with mud from the trench. The present invention provides a pipe fitting which can be readily lifted, moved, rotated, or otherwise manhandled by hand thereby alleviating the difficulties hitherto experienced.

In one aspect, the present invention provides an elongate hollow member comprising a thermoplastic heat fusion pipe fitting and having at least one open end, and having on its external surface either
(i) dedicated means for lifting, moving, or rotating the hollow member by hand, which lifting, moving or rotating means comprises:-
   (a) at least one functional member secured tc the hollow member or integrally moulded therewith, and extending outwardly therefrom, said functional member being so shaped that it can be gripped or held by hand; or
   (b) at least one surface feature or indentation adapted to provide hand gripping or holding means; or
(ii) having on its external surface at least one securing or mounting means adapted to co-operate and engage with a functional member so as to secure or mount the functional member on the hollow member, the functional member being so shaped that it can be gripped or held by hand,

the arrangement being such that the hollow member can be lifted, moved or rotated by hand using the functional member or hand gripping means, without touching the internal surface of the hollow member and without passing the hands underneath the hollow member.

In this invention the functional member is dedicated to its purpose, that is to say it should not be associated with secondary functions such as, for example, making electrical connections, connections to another member, or passing a fluid into or out of said hollow member. The functional member may be subjected to quite severe mechanical stresses in use, and such secondary functions may well be hindered or damaged if associated therewith.

Preferably, the functional member is not associated with electrical connections, is not adapted to be connected to another member, is not adapted to pass a fluid into or out of said pipe, and is preferably not a strengthening member.

The invention is particularly advantageously applied to thermoplastic pipe fittings such as plastics sleeves and connecting pieces, for example, those made from thermoplastic materials such as polyolefins, for example, polyethylene or polypropylene. Other suitable thermoplastic materials are vinyl resins for example, polyvinylchloride; polystyrene; or acrylic resins. The thermoplastic material, can be a crosslinked thermoplastic material, for example, cross linked polyethylene.

The invention is primarily applicable to relatively short hollow members, for example sleeves or other fittings adapted for sliding over or into other pipes, or fittings such as connecting pieces. However, the invention is applicable to any length of hollow member suitable for the intended use and the longer the hollow member, the greater the number of functional members which is desirable. Thus the length of the hollow member may range from a few cms, say for example about 5 cms, to several metres, for example up to 3 metres. Preferably the length of the hollow member is from about 10 cms to about 60 cms. The invention finds particular application when the maximum diameter of the pipe to be joined is about 180 mms or greater, especially 250 mms or greater and particularly up to and including 315 mms or more, for example up to and including 400 mms.

The functional member may be secured to the hollow member, for example, by welding or fusion or may be integrally moulded to the hollow member. The integral moulding is especially suitable when the hollow member is relatively short. In another embodiment, the functional member can be a separate item, having means for attachment to a boss or other mounting means moulded into the external surface of the hollow member.

In a preferred aspect of the invention, the functional member can take the form of a handle which is so shaped that it can be gripped or held by the hand so as to be able to lift or move the hollow member. Thus, one form of handle primarily designed for lifting the hollow member from one place to another is a T-shape member integrally moulded with or attached to the hollow member, for example, by means of a screw-threaded boss or similar mounting means so that the top of the T is spaced from the hollow member. The top of the T can run substantially parallel to the axis of the hollow member, or at an angle thereto. Clearly, the "vertical" portion of the T will have to be long enough for the fingers of the hand to be able to be inserted between the "horizontal" portion of the T and the pipe. Another suitable form of handle would be a loop in which the fingers could be inserted, or a ball, disc or other suitable means to gain purchase.

Other forms of handle which are primarily intended to facilitate the manoeuvring of the hollow member as opposed to facilitating the lifting of the hollow member are simple rods extending outwards from the surface of the hollow member, ie, extending radially outwards if the hollow member is of circular cross-section. These rods may have indentations for the fingers, and may be slightly tapered if desired but these features are not essential. For lifting the hollow member, it will usually be necessary to provide two directly opposed rods, and if the pipe is circular, they can be diametrically opposed. However, one suitably shaped rod may be used in some cases, particularly where its function is mainly to facilitate rotation of the hollow member.

In a preferred construction, the elongate hollow member may comprise a pipe of circular section having a T-shaped handle and/or two diametrically opposed rods, which may be tapered handles.

In another embodiment, the hollow member is provided with a least one surface feature or indentation adapted to provide hand gripping means. The surface feature may be proud of the surface of the hollow member, for example, it may comprise corrugations, or a knurled region extending around the hollow member circumference. Alternatively, the hand gripping means may comprise indentations having recessed or under-cut portions into which the fingers can be inserted so as to grip the hollow member. In the latter embodiment the gripping means may be flush with the surface, which can provide an advantage in certain circumstances.

In one aspect of the invention the functional member is not associated with electrical connections, not adapted to be connected to another member, not adapted to pass a fluid into out of the pipe, and preferably not a strengthening member. Thus, for example, the functional member should not have an electrical cable inserted therein and is not a sleeve or chimney surrounding an electrical connection. Also, for example, it should not be adapted to be connected to other pipes or electrical cables, e.g. a flange, and it should not be a branch pipe whereby fluid would be able to leave or enter the hollow member of the invention. Finally, the functional member is preferably not a strengthening member such as, for example, a tension-sustaining reinforcing member.

As previously mentioned, the elongate hollow member of the invention comprises a heat-fusion pipe fitting which can be used, for example, for joining lengths of thermoplastic or cross-linked plastic pipe. In one embodiment, the elongate hollow member comprises a pipe fitting which has a body portion adapted to accommodate plastic pipes at both ends. The pipe fitting has an electrical heating element which is embedded therein and which is connected to terminals outside the body portion, to which terminals electric power is supplied on installation. When the heating element is powered, the pipe fitting softens in the locality of the heating element and fuses the fitting to the pipes located in the ends of the body portion. Some fusion of the pipe surface may also occur when thermoplastic pipes such as, for example, polyethylene pipes are used, thus strengthening the bond. In an alternative embodiment, the pipe fitting may be provided with an adhesive on its internal surface, which is activated by heat from the heating element to melt and form a bond.

Preferably both the pipes to be joined and the hollow member of the invention are made from the same thermoplastic material, most preferably a polyethylene.

The invention provides a great advance in easing the carrying or transporting of pipe fitting such as sleeves, and connecting pieces around a site, but there are also further advantages. It has been found that operators can handle a pipe fitting without gripping the internal (fused area) surface of the fitting, thereby eliminating a potential source of contamination. Particularly for polyethylene pipes, the surfaces of which are glossy and slippery, it has been found that the presence of one or more functional members improves the ability of the operator to locate the fitting in the correct position by rotating, swivelling and/or sliding the fitting or coupling into place. Additionally it has been found that when the pipes are buried underground, the functional members which protrude from the pipe, provide additional anchorage against pipe displacement due to expansion and contraction of the system. They thus act as soil stress anchors along the pipeline.

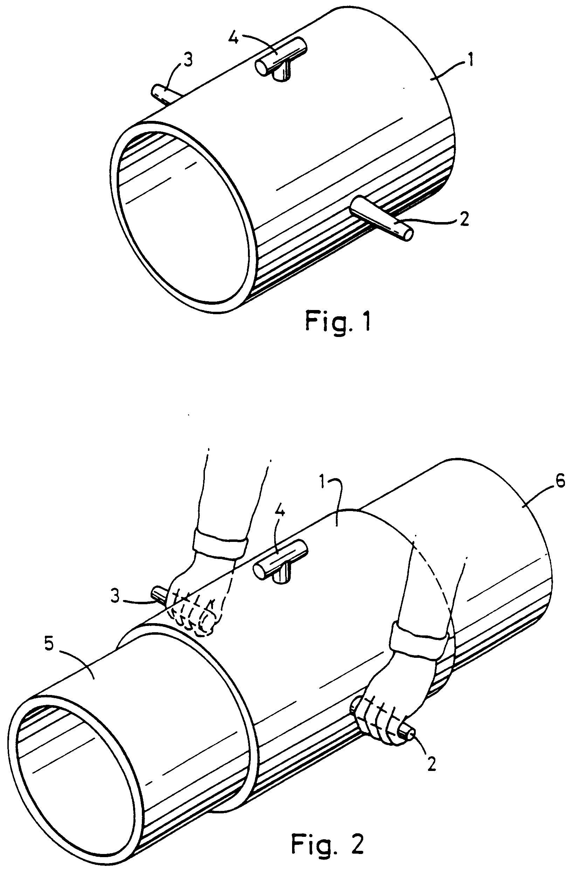

An embodiment of the invention will now be described with reference to and as illustrated in figures 1 and 2 of the drawings in which
Figure 1. is a perspective view of a pipe fitting of the invention; and
Figure 2. shows in perspective the handling of the pipe fitting.

Referring to the figures, pipe fitting 1 is provided with two diametrically located, tapered handles 2 and 3. Also provided is a T-shaped handle 4, disposed on a radius transverse to the axis of the tapered handles.

From figure 2 the manoeuvring of the fitting over two pipes 5 and 6 is shown.

## Claims

1. An elongate hollow member comprising a thermoplastic heat fusion pipe fitting (1) and having at least one open end, and characterised in that it has on its external surface either
(i) dedicated means (2,3,4) for lifting, moving or rotating the hollow member by hand, which lifting, moving or rotating means (2,3,4) comprises:
(a) at least one functional member (2,3,4) secured to the hollow member or integrally moulded therewith, and extending outwardly therefrom, said functional member (2,3,4,) being shaped so that it can be gripped or held by hand; or
(b) at least one surface feature or indentation adapted to provide hand gripping means; or
(ii) having on its external surface at least one securing or mounting means adapted to co-operate and engage with a functional member so as to secure or mount the functional member on the hollow member, the functional member being so shaped that it can be gripped or held by hand,
the arrangement being such that the hollow member can be lifted, moved or rotated by hand using the functional member or hand gripping means, without touching the internal surface of the hollow member, and without passing the hands underneath the hollow member.

2. A hollow member according to claim 1, characterised in that said functional member (2,3,4) is not associated with electrical connections, is not adapted to be connected to another member and is not adapted to pass a fluid into or out of said pipe.

3. A hollow member according to Claim 2, in which the functional member (2,3,4) is not a strengthening member.

4. A hollow member according to Claim 2 or 3, characterised in that it is a sleeve (1) or connecting piece (1).

5. A hollow member according to any of the preceding claims, characterised in that it is made of polyethylene.

6. A hollow member according to any of the preceding claims, characterised in having a length of from 10 cms to 60 cms and a diameter of from 180 mms to 400 mms.

7. An hollow member according to any of the preceding claims, characterised in that it has a circular cross-section and has a T-shaped handle (4) and/or two diametrically opposed tapered handles (2,3).

8. A hollow member according to any of the preceding claims, characterised in that it comprises a pipe fitting (1) having a body portion adapted to accommodate plastic pipes (5,6) at both ends, the pipe fitting (1) having an electrical heating element embedded therein, which element is connected to terminals outside the body portion.

9. The manhandling of an elongate hollow member, characterised in that the hollow member (1) is as claimed in any one of claims 1 to 8.

## Patentansprüche

1. Länglicher Hohlkörper mit einem thermoplastischen, wärmeschmelzbaren Rohrverbindungsstück (1) und mit wenigstens einem offenen Ende, dadurch gekennzeichnet, daß er auf seiner Außenoberfläche entweder
(i) Spezialeinrichtungen (2, 3, 4) zum Heben, Bewegen oder Drehen des Hohlkörpers von Hand aufweist, wobei die Hebe-, Bewegungs- oder Dreheinrichtungen (2, 3, 4)
(a) wenigstens ein Funktionselement (2, 3, 4), das an dem Hohlkörper befestigt oder einstückig mit ihm gegossen ist, sich von ihm nach auswärts erstreckt und so geformt ist, daß es von Hand gegriffen oder gehalten werden kann, oder
(b) wenigstens ein Oberflächenmerkmal oder eine Vertiefung zur Ausbildung einer Handgriffeinrichtung
enthalten, oder
(ii) an seiner Außenoberfläche wenigstens eine Befestigungs- oder Montageeinrichtung aufweist, die zum Zusammenwirken und Eingriff mit einem Funktionselement ausgelegt ist, um dieses an dem Hohlkörper zu befestigen oder anzubringen, wobei das Funktionselement so geformt ist, daß es von Hand gegriffen oder gehalten werden kann,
und wobei die Anordnung derart vorgesehen ist, daß der Hohlkörper unter Verwendung des Funktionselements oder der Handgriffeinrichtungen von Hand gehoben, bewegt oder gedreht werden kann, ohne daß die Innenoberfläche des Hohlkörpers berührt und ohne daß mit den Händen unter dem Hohlkörper hindurchgegriffen wird.

2. Hohlkörper nach Anspruch 1, dadurch gekennzeichnet, daß das Funktionselement (2, 3, 4) nicht mit elektrischen Anschlüssen in Zusammenhang steht, nicht zum Anschluß an ein anderes Element ausgelegt und nicht zum Durchlassen eines Fluids in das Rohr hinein oder aus diesem heraus vorgesehen ist.

3. Hohlkörper nach Anspruch 2, bei dem das Funktionselement (2, 3, 4) kein Verstärkungselement ist.

4. Hohlkörper nach Anspruch 2 oder 3, dadurch gekennzeichnet, daß er eine Hülse (1) oder ein Anschlußstück (1) ist.

5. Hohlkörper nach einem der vorhergehenden Ansprüche, dadurch gekennzeichnet, daß er aus Polyethylen besteht.

6. Hohlkörper nach einem der vorhergehenden Ansprüche, dadurch gekennzeichnet, daß er eine Länge von 10 cm bis 60 cm und einen Durchmesser von 180 mm bis 400 mm aufweist.

7. Hohlkörper nach einem der vorhergehenden Ansprüche, dadurch gekennzeichnet, daß er einen kreisförmigen Querschnitt und einen T-förmigen Griff (4) und/oder zwei einander diametral entgegengesetzte, sich verjüngende Griffe (2, 3) aufweist.

8. Hohlkörper nach einem der vorhergehenden Ansprüche, dadurch gekennzeichnet, daß er ein Rohrverbindungsstück (1) enthält, das einen Körperbereich zum Aufnehmen von Plastikrohren (5, 6) an seinen beiden Enden aufweist und mit einem darin eingebetteten elektrischen Heizelement versehen ist, das mit Anschlüssen außerhalb des Körperbereichs verbunden ist.

9. Manuelle Handhabung eines länglichen Hohlkörpers, gekennzeichnet durch einen Hohlkörper (1), wie er in einem der Ansprüche 1 bis 8 beansprucht ist.

## Revendications

1. Élément creux allongé comprenant un raccord thermoplastique (1) pour tuyaux, apte à fondre par application d'une chaleur et comportant au moins une extrémité ouverte, caractérisé en ce que soit il comporte, sur sa surface extérieure,
(i) des moyens spécialisés (2,3,4) pour permettre le soulèvement, le déplacement ou la rotation de l'élément creux à la main, lesquels moyens de soulèvement, déplacement ou de rotation (2,3,4) comprennent :
(a) au moins un élément fonctionnel (2,3,4) fixé à l'élément creux ou moulé d'un seul tenant avec ce dernier et s'étendant vers l'extérieur à partir de l'élément creux, ledit élément fonctionnel (2,3,4) étant conformé de telle sorte qu'on peut le saisir ou le tenir à la main;
(b) au moins une caractéristique ou une indentation de surface apte à former des moyens de préhension manuelle;
(ii) il comporte sur sa surface extérieure au moins un moyen de fixation et de montage destiné à coopérer et engrener avec un élément fonctionnel de manière à fixer ou monter l'élément fonctionnel sur l'élément creux, l'élément fonctionnel étant conformé de telle sorte qu'on peut le saisir ou le tenir à la main,
l'agencement étant tel qu'on peut soulever, déplacer ou faire tourner manuellement l'élément creux en utilisant l'élément fonctionnel ou les moyens de préhension manuelle, sans toucher la surface intérieure de l'élément creux et sans passer les mains au-dessous de l'élément creux.

2. Élément creux selon la revendication 1, caractérisé en ce que ledit élément fonctionnel (2,3,4) n'est pas associé à des connexions électriques, n'est pas adapté pour être raccordé à un autre élément et n'est pas adapté pour introduire ou faire sortir un fluide dans ou hors de ledit tuyau.

3. Élément creux selon la revendication 2, dans lequel l'élément fonctionnel (2,3,4) n'est pas un élément de rigidification.

4. Élément creux selon la revendication 2 ou 3, caractérisé en ce qu'il s'agit d'un manchon (1) ou d'un élément de raccordement (1).

5. Élément creux selon l'une quelconque des revendications précédentes, caractérisé en ce qu'il est réalisé en polyéthylène.

6. Élément creux selon l'une quelconque des revendications précédentes, caractérisé en ce qu'il possède une longueur comprise entre 10 cm et 60 cm et un diamètre compris entre 180 mm et 400 mm.

7. Élément creux selon l'une quelconque des revendications précédentes, caractérisé en ce qu'il possède une section transversale circulaire et comporte une poignée en forme de T (4) et/ou deux poignées diamétralement opposées de forme rétrécie (2,3).

8. Élément creux selon l'une quelconque des revendications précédentes, caractérisé en ce qu'il comprend un raccord (1) pour tuyaux comportant une partie principale apte à recevoir des tuyaux en matière plastique (5,6) à ses deux extrémités, le raccord (1) pour tuyaux possédant un élément de chauffage électrique inséré en lui, lequel élément est raccordé à des bornes situées à l'extérieur de la partie formant corps.

9. Manipulation d'un corps creux allongé, caractérisée en ce que le corps creux (1) est tel que revendiqué selon l'une quelconque des revendications 1 à 8.
